# EUROPEAN PATENT SPECIFICATION

(11) **EP 4 085 561 B1**
(45) Date of publication and mention of the grant of the patent: **22.10.2025**
(21) Application number: 20753406.6
(22) Date of filing: 30.03.2020
(51) Int. Cl.: H04L 5/00

(54) **APPARATUS AND METHOD OF COMMUNICATION OF SAME**
KOMMUNIKATIONSVERFAHREN UND KOMMUNIKATIONSVORRICHTUNG
PROCÉDÉ ET DISPOSITIF DE COMMUNICATION

(43) Date of publication of application: 09.11.2022
(73) Proprietor: GUANGDONG OPPO MOBILE TELECOMMUNICATIONS CORP., LTD., Wusha Village, Chang'an Town Dongguan City, Guangdong (CN)
(72) Inventor: LIN, Hao, 92200 Neuilly sur Seine (FR)
(74) Representative: Ipside
(86) International application number: PCT/IB2020/000485
(87) International publication number: WO 2021/198722

(56) References cited:
- EP-A1- 3 567 789
- WO-A1-2019/099388
- WO-A1-2019/099738
- WO-A1-2019/194624
- WO-A1-2020/032686
- WO-A1-2020/032700
- WO-A1-2020/032738
- WO-A1-2020/060381
- US-A1- 2019 150 123
- US-A1- 2019 312 665
- US-A1- 2020 045 696
- US-A1- 2020 053 728
- SAMSUNG: "Introduction of shared spectrum channel access", vol. RAN WG1, no. Reno, USA; 20191118 - 20191122, 7 December 2019 (2019-12-07), XP051838455, Retrieved from the Internet <URL:https://ftp.3gpp.org/tsg_ran/TSG_RAN/TSGR_86/Docs/RP-192636.zip 38213_CR0071_(Rel-16)_ R1-1913632.docx> [retrieved on 20191207]
- "3rd Generation Partnership Project; Technical Specification Group Radio Access Network; NR; Physical layer procedures for control (Release 16)", 14 January 2020 (2020-01-14), XP051843497, Retrieved from the Internet <URL:https://ftp.3gpp.org/tsg_ran/WG1_RL1/DRAFT/Clean_versions/38213-g00.zip 38213-g00.docx> [retrieved on 20200114]
- SAMSUNG: "Corrections on shared spectrum channel access", vol. RAN WG1, no. e-Meeting; 20200224 - 20200306, 11 March 2020 (2020-03-11), XP051865187, Retrieved from the Internet <URL:https://ftp.3gpp.org/tsg_ran/TSG_RAN/TSGR_87e/Docs/RP-200185.zip 38213_CR0091_(Rel-16)_ R1-2001456.docx> [retrieved on 20200311]
- SAMSUNG: "Introduction of shared spectrum channel access", vol. TSG RAN, no. Sitges, Spain; 20191209 - 20191212, 12 December 2019 (2019-12-12), XP051839847, Retrieved from the Internet <URL:https://ftp.3gpp.org/Meetings_3GPP_SYNC/RAN/Docs/RP-193221.zip RP-193221 CR_38.213_NRU-Core.docx> [retrieved on 20191212]
- MOTOROLA MOBILITY ET AL: "Agreements from email discussion [100e-NR-unlic-NRU- DL_Signals_and_Channels-01] on COT duration indication", vol. RAN WG1, no. 20200224 - 20200306, 6 March 2020 (2020-03-06), XP051860433, Retrieved from the Internet <URL:https://ftp.3gpp.org/tsg_ran/WG1_RL1/TSGR1_100_e/Docs/R1-2001387.zip R1-2001387.docx> [retrieved on 20200306]

## Description

### TECHNICAL FIELD

The present disclosure relates to the field of communication systems, and more particularly, to an apparatus and a method of communication of the same, which can provide a good communication performance and high reliability.

### BACKGROUND

In an unlicensed band, an unlicensed spectrum is a shared spectrum. Communication equipments in different communication systems can use the unlicensed spectrum as long as the unlicensed meets regulatory requirements set by countries or regions on a spectrum. There is no need to apply for a proprietary spectrum authorization from a government.

In order to allow various communication systems that use the unlicensed spectrum for wireless communication to coexist friendly in the spectrum, some countries or regions specify regulatory requirements that must be met to use the unlicensed spectrum. For example, a communication device follows a listen before talk (LBT) procedure, that is, the communication device needs to perform a channel sensing before transmitting a signal on a channel. When an LBT outcome illustrates that the channel is idle, the communication device can perform signal transmission; otherwise, the communication device cannot perform signal transmission. In order to ensure fairness, once a communication device successfully occupies the channel, a transmission duration cannot exceed a maximum channel occupancy time (MCOT).

On an unlicensed carrier, for a channel occupation time obtained by a base station, it may share the channel occupation time to a user equipment (UE) for transmitting an uplink signal or an uplink channel. In other words, when the base station shares its own channel occupancy time with the UE, the UE can use an LBT mode with higher priority than that used by the UE itself to obtain the channel, thereby obtaining the channel with greater probability.

In new radio-based access to unlicensed spectrum (NRU), a wideband operation can be configured and a configured active bandwidth part (BWP) can include resource block sets (RB sets). In addition, in an NRU wideband operation, a base station (BS) (such as gNB) and a UE can operate in a wider band including RB sets. NR release 15 has defined a BWP concept, thus in a context of the NRU wideband operation, the UE can be configured with an active BWP including multiple RB sets. Multiple RB sets can be assigned by the gNB to the UE for uplink transmission, e.g. a physical uplink control channel (PUCCH) transmission. However, by regulation, priori to each transmission in the spectrum, a sender needs to perform the LBT procedure. This implies that for transmissions of multiple RB sets, multi-RB set-based LBT has to be performed.

Further, in release 16, if a UE is configured, by a base station, to receive a downlink transmission, the UE does not know if the base station will actually realize the configured downlink transmission and the UE needs to receive the configured downlink transmission, or the base station will cancel the configured downlink transmission, due for example prioritizing the configured resources for other service, thus the UE needs to cancel reception of the configured downlink transmission. How to provide a method to confirm the reception of the configured downlink transmission or in what condition the confirmation can be reached is still an open issue. In addition, how to provide a method of cancelling reception of the configured downlink transmission by the UE if a condition is not met is still an open issue.

Therefore, there is a need for an apparatus and a method of communication of the same, which can solve issues in the prior art and provide a method of receiving a configured downlink transmission by a user equipment (UE) if a condition is met.

US 2020/045696 A1 discloses a method including the UE performing transmission and/or reception in a serving cell, wherein the serving cell is in unlicensed spectrum.

WO2019/194624 A1 discloses an operation method of a terminal and a base station and a device for supporting same, according to one specific embodiment, wherein the method is based on signaling, to the terminal, whether or not the base station is occupied by each channel access procedure (CAP) subband through downlink control information (DCI) including slot format information for one or more slots.

WO 2020/032700 A1 discloses a method for transmitting and receiving data on the basis of block interleaving, and a device for supporting same.

### SUMMARY

The present application is set out in the appended set of claims. An object of the present disclosure is to propose an apparatus such as a user equipment (UE) and a method of communication of the same, which can solve issues in the prior art and provide a method of receiving a configured downlink transmission by a user equipment (UE) if a condition is met.

Aspects of the present invention are provided in the independent claims and further detailed in the dependent claims.

The scope of the present invention is defined by the scope of the appended claims.

### BRIEF DESCRIPTION OF DRAWINGS

In order to more clearly illustrate the embodiments of the present disclosure or related art, the following figures will be briefly described in the embodiments. It is obvious that the drawings are merely some embodiments of the present disclosure, a person having ordinary skill in this field can obtain other figures according to these figures without paying the premise.
FIG 1 is a block diagram of a user equipment (UE) and a base station (BS) (e.g., gNB) of communication in a communication network system according to an embodiment of the present disclosure.
FIG 2 is a flowchart illustrating a method of communication of a UE according to an embodiment of the present disclosure.
FIG 3 is a flowchart illustrating a method of communication of a UE according to an embodiment of the present disclosure.
FIG 4 is a flowchart illustrating a method of communication of a UE according to an example 1 of the present disclosure.
FIG 5 is a flowchart illustrating a method of communication of a UE according to an example 2 of the present disclosure.
FIG 6 is a flowchart illustrating a method of communication of a UE according to an example 3 of the present disclosure.
FIG 7 is a flowchart illustrating a method of communication of a UE according to an example 4 of the present disclosure.
FIG 8 is a flowchart illustrating a method of communication of a UE according to an example 5 of the present disclosure.
FIG 9 is a flowchart illustrating a method of communication of a UE according to an example 6 of the present disclosure.
FIG 10 is a flowchart illustrating a method of communication of a UE according to an example 7 of the present disclosure.
FIG 11 is a flowchart illustrating a method of communication of a UE according to an example 8 of the present disclosure.
FIG 12 is a flowchart illustrating a method of communication of a UE according to an example 9 of the present disclosure.
FIG 13 is a block diagram of a system for wireless communication according to an embodiment of the present disclosure.

### DESCRIPTION OF EMBODIMENTS

Embodiments of the present disclosure are described in detail with the technical matters, structural features, achieved objects, and effects with reference to the accompanying drawings as follows. Specifically, the terminologies in the embodiments of the present disclosure are merely for describing the purpose of the certain embodiment, but not to limit the disclosure.

The scope of the present invention is defined by the scope of the appended claims.

In release 16, if a UE is configured, by a base station, to receive a downlink transmission, the UE does not know if the base station will actually realize the configured downlink transmission and the UE needs to receive the configured downlink transmission, or the base station will cancel the configured downlink transmission, due for example prioritizing the configured resources for other service, thus the UE needs to cancel reception of the configured downlink transmission. How to provide a method to confirm the reception of the configured downlink transmission or in what condition the confirmation can be reached is still an open issue. In addition, how to provide a method of cancelling reception of the configured downlink transmission by the UE if a condition is not met is still an open issue. Some embodiments of the present disclosure can solve issues in the prior art, provide a method of receiving a configured downlink transmission by a UE if a condition is met, and further provide a method of canceling reception of the configured downlink transmission by the UE if a condition is not met. In details, in some embodiments, if a UE is configured to receive a downlink transmission, the UE knows in what case, the configured downlink transmission is valid, so that the UE receives the configured downlink transmission. In some embodiments, if a UE is configured to receive a downlink transmission, the UE knows in what other case, the configured downlink transmission is invalid, so that the UE cancels reception of the configured downlink transmission.

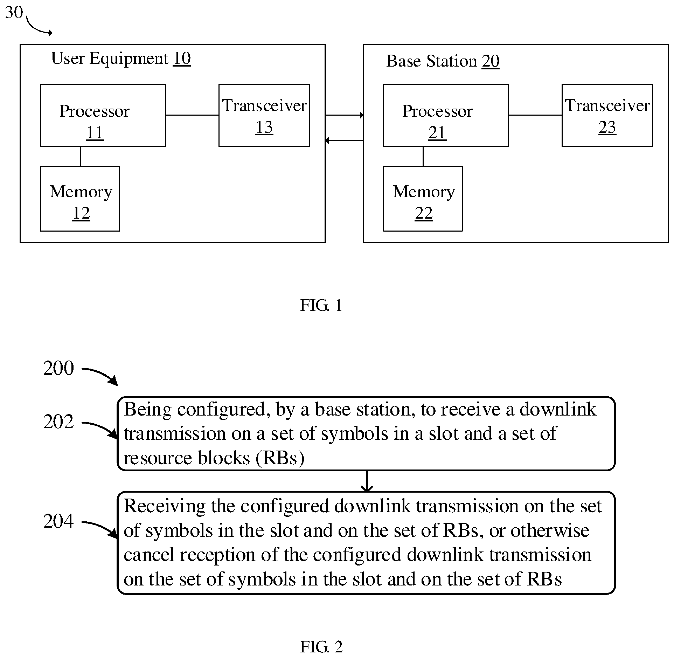

FIG 1 illustrates that, in some embodiments, a user equipment (UE) 10 and a base station (BS) (e.g., gNB) 20 of communication in a communication network system 30 according to an embodiment of the present disclosure are provided. The communication network system 30 includes one or more UEs 10 of a cell and the BS 20. The UE 10 may include a memory 12, a transceiver 13, and a processor 11 coupled to the memory 12, the transceiver 13. The base station 20 may include a memory 22, a transceiver 23, and a processor 21 coupled to the memory 22, the transceiver 23. The processor 11 or 21 may be configured to implement proposed functions, procedures and/or methods described in this description. Layers of radio interface protocol may be implemented in the processor 11 or 21. The memory 12 or 22 is operatively coupled with the processor 11 or 21 and stores a variety of first information to operate the processor 11 or 21. The transceiver 13 or 23 is operatively coupled with the processor 11 or 21, and the transceiver 13 or 23 transmits and/or receives a radio signal.

The processor 11 or 21 may include application-specific integrated circuit (ASIC), other chipset, logic circuit and/or data processing device. The memory 12 or 22 may include read-only memory (ROM), random access memory (RAM), flash memory, memory card, storage medium and/or other storage device. The transceiver 13 or 23 may include baseband circuitry to process radio frequency signals. When the embodiments are implemented in software, the techniques described herein can be implemented with modules (e.g., procedures, functions, and so on) that perform the functions described herein. The modules can be stored in the memory 12 or 22 and executed by the processor 11 or 21. The memory 12 or 22 can be implemented within the processor 11 or 21 or external to the processor 11 or 21 in which case those can be communicatively coupled to the processor 11 or 21 via various means as is known in the art.

The transceiver 13 is configured, by a base station 20, to receive a downlink transmission on a set of symbols in a slot and a set of resource blocks (RBs) and the transceiver 13 is configured to receive the configured downlink transmission on the set of symbols in the slot and on the set of RBs, or otherwise to cancel reception of the configured downlink transmission on the set of symbols in the slot and on the set of RBs. This can solve issues in the prior art and provide a method of receiving a configured downlink transmission on a set of symbols in a slot and a set of resource blocks (RBs) or otherwise canceling reception of the configured downlink transmission on the set of symbols in the slot and on the set of RBs.

The transceiver 13 is configured, by a base station 20, to receive a downlink transmission on a set of symbols in a slot and receive the configured downlink transmission when the configured downlink transmission is valid or realized. This can provide a method of receiving the configured downlink transmission by the UE if a condition is met. In some embodiments, the processor 11 is configured to control the transceiver 13 to cancel reception of the configured downlink transmission when the configured downlink transmission is invalid or not realized. This can provide a method of canceling reception of the configured downlink transmission by the UE if a condition is not met. The configured downlink transmission validation is corresponding to the presented method.

In some embodiments, the set of symbols in the slot are configured as flexible by parameters, tdd-UL-DL-ConfigurationCommon and tdd-UL-DLConfigurationDedicated. The parameters are provided in system information and the slot format of the set of symbols may be updated to downlink or uplink or remain flexible by a DCI format. In some embodiments, the processor 11 is configured to control the transceiver 13 to receive the configured downlink transmission if at least one of the followings is met: a first condition comprises that the processor 11 detects a downlink control information (DCI) format, and the processor 11 considers the set of symbols as downlink when the DCI format is detected; a second condition comprises that the processor 11 detects the DCI format, and the processor 11 considers that the set of symbols are within a channel occupancy duration of a base station 20 when the DCI format is detected; or a third condition comprises that the processor 11 detects the DCI format, and the processor 11 considers that resource block (RB) sets where a first set of RBs are allocated in are available for reception when the DCI format is detected. In some embodiments, the DCI format is a DCI format 2_0.

In some embodiments, the DCI format comprises at least one of the followings: in the first condition, a first information indicates that the set of symbols are downlink; in the second condition, a second information indicates that the set of symbols are within the channel occupancy duration of the base station 20; or in the third condition, a third information indicates that the RB sets where the set of RBs are allocated in are available for reception. In some embodiments, the DCI format does not comprise at least one of the followings: in the first condition, a first information that is used to indicate one or more slot formats; in the second condition, a second information that is used to indicate the channel occupancy duration of the base station 20; or in the third condition, a third information that is used to indicate one or more RB sets availability for reception.

In some embodiments, if in the first condition, the DCI format does not comprise the first information that is used to indicate one or more slot format. Due to the absence of the first information in the DCI format, the slot format of the set of symbols cannot be indicated, thus, the processor 11 considers that the first set of symbols are indicated as downlink. In some embodiments, if the first condition is met, the transceiver 13 receives the configured downlink transmission; otherwise the transceiver 13 cancels reception of the configured downlink transmission.

In some embodiments, if in the second condition, the DCI format does not comprise the second information that is used to indicate the channel occupancy duration of the base station 20, the processor 11 cannot obtain the channel occupancy duration indication from the DCI format due to the absence of the second information. In this case, the processor 11 considers that the first set of symbols are within the channel occupancy duration of the base station by the first information when the DCI format comprises the first information and the transceiver 13 receives the first information in the DCI format that indicates the slot format of the set of symbols. In some embodiments, if in the second condition, the DCI format does not comprise the second information indicating the channel occupancy duration of the base station, the processor considers that the first set of symbols are within the channel occupancy duration of the base station 20 by a higher layer parameter when the transceiver 13 receives the higher layer parameter that indicates that the set of symbols are within the channel occupancy duration of the base station 20. In some embodiments, if in the second condition, the DCI format does not comprise the first information and the second information, the processor 11 considers that the first set of symbols are within the channel occupancy duration of the base station by a higher layer parameter when the transceiver 13 receives the higher layer parameter that indicates that the set of symbols are within the channel occupancy duration of the base station 20. In some embodiments, the higher layer parameter comprises semiStaticChannel AccessConfig-r16. In some embodiments, the channel occupancy duration is a periodic channel occupancy provided by the higher layer parameter.

In some embodiments, if the first condition and the second condition are met, the transceiver 13 receives the configured downlink transmission; otherwise the transceiver 13 cancels reception of the configured downlink transmission. In some embodiments, if in the third condition, the DCI format does not comprise the third information that is used to indicate one or more RB sets availability for reception and if the first set of RBs are in one or more RB sets, the processor 11 cannot obtain the RB set availability for reception indication from the DCI format, thus the processor 11 considers that the RB sets are available for reception when the processor 11 detects the DCI format. Optionally, the processor 11 considers that the RB sets are available for reception when the set of the symbols are within the channel occupancy duration of the base station 20, where the channel occupancy duration is determined by other presented embodiments. In some embodiments, if the DCI format does not comprise at least one of the first information, the second information, and the third information, and if the processor 11 does not detect the DCI format providing a corresponding indication for the configured downlink transmission, the transceiver 13 receives the configured downlink transmission. In some embodiments, if the DCI format comprises at least one of the first information, the second information, and the third information, and if the processor 11 does not detect the DCI format providing a corresponding indication for the configured downlink transmission, in this case, the processor 11 cannot verify if the validation conditions are met for receiving the configured downlink transmission, thus, the processor 11 considers the validation conditions are not met, and the transceiver 13 cancels reception of the configured downlink transmission. In some embodiments, if the DCI format comprises at least one of the first information, the second information, and the third information, and if the processor 11 does not detect the DCI format providing a corresponding indication for the configured downlink transmission, in this case, the processor 11 cannot verify if the validation conditions are met for receiving the configured downlink transmission, thus, the processor 11 does not consider all the configured downlink transmission is valid, and the transceiver 13 only receives valid configured downlink transmission. The valid configured downlink transmission in this case is physical downlink shared channel (PDSCH) transmission or physical downlink control channel (PDCCH) transmission and the invalid configured downlink transmission is channel state information reference signal (CSI-RS) transmission. In some embodiments, the corresponding indication from the first information is that the set of symbols are downlink or flexible or uplink. Optionally, the corresponding indication from the first information is that the set of symbols are downlink. In some embodiments, the corresponding indication from the second information is that the set of symbols are in the channel occupancy duration of the base station. In some embodiments, the corresponding indication from the third information is that one or more RB sets, where the set of RBs are configured in, are available for reception.

In some embodiments, if the first condition, the second condition, and the third condition are met, the transceiver 13 receives the configured downlink transmission; otherwise the transceiver 13 cancels reception of the configured downlink transmission. In some embodiments, the configured downlink transmission comprises a channel state information reference signal (CSI-RS) transmission, a physical downlink shared channel (PDSCH) transmission, or a physical downlink control channel (PDCCH) transmission. In some embodiments, the set of symbols in the slot are indicated by a slot format indication (SFI)-index field in the DCI format. In some embodiments, if parameters, tdd-UL-DL-ConfigurationCommon and tdd-UL-DLConfigurationDedicated are not provided, all the symbols are considered as flexible.

FIG 2 illustrates a method 200 of communication of a UE according to an embodiment of the present disclosure. The method 200 includes: a block 202, being configured, by a base station, to receive a downlink transmission on a set of symbols in a slot and a set of resource blocks (RBs), and a block 204, receiving the configured downlink transmission on the set of symbols in the slot and on the set of RBs, or otherwise cancel reception of the configured downlink transmission on the set of symbols in the slot and on the set of RBs. This can solve issues in the prior art and provide a method of receiving a configured downlink transmission on a set of symbols in a slot and a set of resource blocks (RBs) or otherwise canceling reception of the configured downlink transmission on the set of symbols in the slot and on the set of RBs.

In some embodiments, the set of symbols in the slot are configured as flexible by one or more parameters, tdd-UL-DL-ConfigurationCommon and/or tdd-UL-DLConfigurationDedicated. The parameters are provided in system information and the slot format of the set of symbols may be updated to downlink or uplink or remain flexible by a DCI format. In some embodiments, receiving the configured downlink transmission on the set of symbols in the slot and on the set of RBs comprises receiving the configured downlink transmission on the set of symbols in the slot and on the set of RBs if the UE detects a downlink control information (DCI) format. In some embodiments, canceling the reception of the configured downlink transmission on the set of symbols in the slot and on the set of RBs comprises canceling the reception of the configured downlink transmission on the set of symbols in the slot and on the set of RBs if the UE does not detect a DCI format. In some embodiments, the DCI format is a DCI format 2_0. In some embodiments, the DCI format comprises at least one of the followings: a first information that is used to indicate one or more slot formats; a second information that is used to indicate the channel occupancy duration of the base station; or a third information that is used to indicate one or more RB sets availability for reception. In some embodiments, the DCI format comprises the first information, and the first information indicates the set of symbols as downlink. In some embodiments, the DCI format comprises the second information, and the second information indicates that the set of symbols are within the channel occupancy duration of the base station. In some embodiments, the DCI format comprises the third information, and the third information indicates that one or more RB sets, where the set of RBs are allocated in, are available for reception. In some embodiments, the UE is configured to monitor PDCCH for detection of the DCI format 2_0 but the UE does not detect the DCI format 2_0.

In some embodiments, the DCI format does not comprise at least one of the followings: in the first condition, a first information that is used to indicate one or more slot formats; in the second condition, a second information that is used to indicate the channel occupancy duration of the base station; or in the third condition, a third information that is used to indicate one or more RB sets availability for reception.

In some embodiments, if the DCI format does not comprise the first information that is used to indicate one or more slot formats. Due to the absence of the first information in the DCI format, the slot format of the set of symbols cannot be indicated by the DCI format, thus, the set of symbols are downlink. In some embodiments, if the DCI format does not comprise the second information that is used to indicate the channel occupancy duration of the base station. Due to the absence of the second information in the DCI format, the set of symbols are within the channel occupancy duration of the base station when the UE receives the first information in the DCI format indicating that the set of symbols are downlink or uplink or flexible.

In some embodiments, if the DCI format does not comprise the second information indicating the channel occupancy duration of the base station, the set of symbols are within the channel occupancy duration of the base station when the UE receives a higher layer parameter that indicates that the set of symbols are within the channel occupancy duration of the base station. In some embodiments, the channel occupancy duration is a periodic channel occupancy provided by the higher layer parameter. In some embodiments, the higher layer parameter is semiStaticChannelAccessConfig-r16. In some embodiments, the higher layer parameter is received by the UE from the system information or radio resource configuration (RRC). In some embodiments, the system information is system information block 1 (SIB1). In some embodiments, if the DCI format does not comprise the first information and the second information indicating that the set of symbols are within the channel occupancy duration of the base station, the set of symbols are within the channel occupancy duration of the base station when the UE receives a higher layer parameter that indicates that the set of symbols are within the channel occupancy duration of the base station.

In some embodiments, if the DCI format does not comprise the third information indicating one or more RB sets availability for reception. In this case, the UE cannot obtain the RB set availability for reception indication from the DCI format, at the same time if the base station configures the set of RBs of the configured downlink transmission in one or more RB sets it would be more logical that the one or more RB sets are available for reception when the UE detects the DCI format. Optionally, the one or more RB sets are available for reception when the set of the symbols are within the channel occupancy duration of the base station, where the channel occupancy duration determination is presented in other embodiments. In some embodiments, receiving the configured downlink transmission on the set of symbols in the slot and on the set of RBs comprises: receiving the configured downlink transmission on the set of symbols in the slot and on the set of RBs if the UE does not detect the DCI format. In some embodiments, the DCI format comprises DCI format 2_0.

In some embodiments, receiving the configured downlink transmission on the set of symbols in the slot and on the set of RBs comprises: receiving the configured downlink transmission on the set of symbols in the slot and on the set of RBs if the UE does not detect the DCI format. In some embodiments, the DCI format is DCI format 2_0, where the DCI format 2_0 does not comprise at least one of the followings: a first information that is used to indicate one or more slot formats; a second information that is used to indicate the channel occupancy duration of the base station; or a third information that is used to indicate one or more RB sets availability for reception. In some embodiments, if the DCI format comprises at least one of the first information, the second information, and the third information, and if the UE does not detect the DCI format providing a corresponding indication for the configured downlink transmission, in this case, the UE cannot verify if the validation conditions are met for receiving the configured downlink transmission, thus, the UE cancels the reception of the configured downlink transmission. Optionally, the UE receives the configured downlink transmission if the downlink transmission is physical downlink shared channel (PDSCH) transmission or physical downlink control channel (PDCCH) transmission, and the UE cancels the reception of the configured downlink transmission if the downlink transmission is channel state information reference signal (CSI-RS) transmission. In some embodiments, the corresponding indication from the first information is that the set of symbols are downlink or flexible or uplink. Optionally, the corresponding indication from the first information is that the set of symbols are downlink. In some embodiments, the corresponding indication from the second information is that the set of symbols are in the channel occupancy duration of the base station. In some embodiments, the corresponding indication from the third information is that one or more RB sets, where the set of RBs are configured in, are available for reception.

In some embodiments, the configured downlink transmission comprises a channel state information reference signal (CSI-RS), a physical downlink shared channel (PDSCH), or a physical downlink control channel (PDCCH). In some embodiments, the first information is the slot format indication (SFI)-index field in DCI format 2_0. In some embodiments, the second information is the channel occupancy duration field in DCI format 2_0. In some embodiments, the third information comprises a bitmap having a one-to-one mapping with a set of RB sets in DCI format 2_0. In some embodiments, if the one or more parameters, tdd-UL-DL-ConfigurationCommon and/or tdd-UL-DLConfigurationDedicated are not provided, all the symbols are considered as flexible.

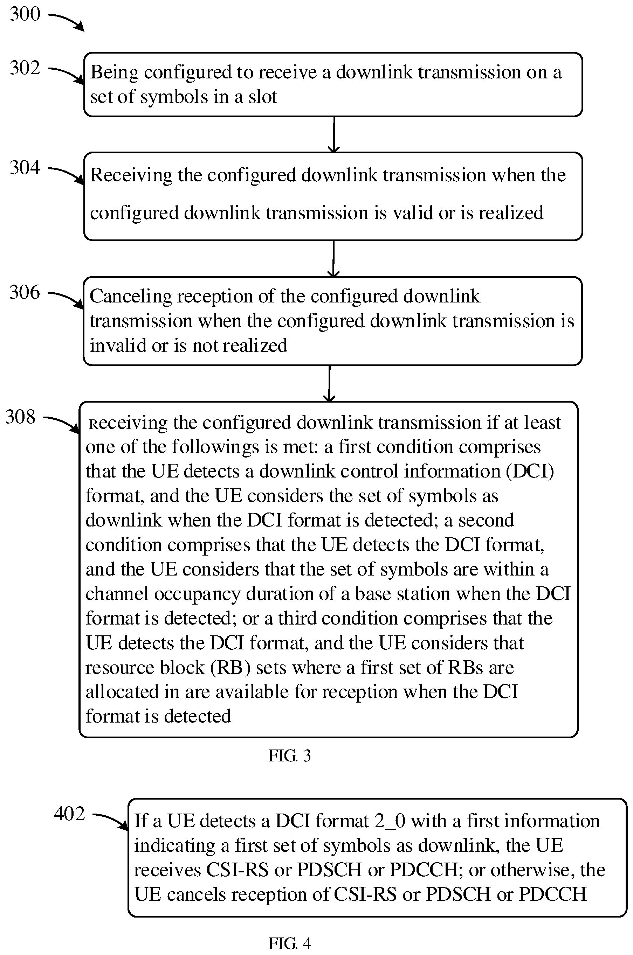

FIG 3 illustrates a method 300 of communication of a UE according to an embodiment of the present disclosure. In some embodiments, the method 300 includes: a block 302, being configured to receive a downlink transmission on a set of symbols in a slot, a block 304, receiving the configured downlink transmission when the configured downlink transmission is valid or is realized, a block 306, canceling reception of the configured downlink transmission when the configured downlink transmission is invalid or is not realized, and a block 308, receiving the configured downlink transmission if at least one of the followings is met: a first condition comprises that the UE detects a downlink control information (DCI) format, and the UE considers the set of symbols as downlink when the DCI format is detected; a second condition comprises that the UE detects the DCI format, and the UE considers that the set of symbols are within a channel occupancy duration of a base station when the DCI format is detected; or a third condition comprises that the UE detects the DCI format, and the UE considers that resource block (RB) sets where a first set of RBs are allocated in are available for reception when the DCI format is detected. This can provide a method of receiving a configured downlink transmission by a UE if a condition is met, and further provide a method of canceling reception of the configured downlink transmission by the UE if a condition is not met.

In some embodiments, the set of symbols in the slot are configured as flexible by parameters, tdd-UL-DL-ConfigurationCommon and tdd-UL-DLConfigurationDedicated. In some embodiments, the DCI format is DCI format 2_0. In some embodiments, the DCI format comprises at least one of the followings: in the first condition, a first information indicates that the set of symbols are downlink; in the second condition, a second information indicates that the set of symbols are within the channel occupancy duration of the base station; or in the third condition, a third information indicates that the RB sets where the first set of RBs are allocated in are available for reception. In some embodiments, the DCI format does not comprise at least one of the followings: in the first condition, a first information that is used to indicate one or more slot formats, in the second condition, a second information that is used to indicate the channel occupancy duration of the base station; or in the third condition, a third information that is used to indicate one or more RB sets availability for reception.

In some embodiments, if in the first condition, the DCI format does not comprise the first information, the UE considers that the first set of symbols are indicated as downlink. In some embodiments, if the first condition is met, the UE receives the configured downlink transmission; otherwise the UE cancels reception of the configured downlink transmission. In some embodiments, if in the second condition, the DCI format does not comprise the second information that is used to indicate the channel occupancy duration of the base station. Due to the absence of the second information in the DCI format, the set of symbols are within the channel occupancy duration of the base station when the UE receives the first information in the DCI format indicating that the set of symbols are downlink or uplink or flexible. In some embodiments, if in the second condition, the DCI format does not comprise the second information that is used to indicate the channel occupancy duration of the base station, the UE considers that the first set of symbols are within the channel occupancy duration of the base station when the UE receives the higher layer parameter that indicates that the set of symbols are within the channel occupancy duration of the base station.

In some embodiments, if in the second condition, the DCI format does not comprise the first information and the second information the UE considers that the first set of symbols are within the channel occupancy duration of the base station when the UE receives the higher layer parameter that indicates that the set of symbols are within the channel occupancy duration of the base station. In some embodiments, the higher layer parameter is semiStaticChannel AccessConfig-r16. In some embodiments, the channel occupancy duration is a periodic channel occupancy provided by the higher layer parameter. In some embodiments, the higher layer parameter is received by the UE from the system information or radio resource configuration (RRC). In some embodiments, the system information is system information block 1 (SIB1). In some embodiments, if the first condition and the second condition are met, the UE receives the configured downlink transmission; otherwise the UE cancels reception of the configured downlink transmission. In some embodiments, if in the third condition, the DCI format does not comprise the third information indicating one or more RB sets availability for reception. In this case, the UE cannot obtain the RB set availability for reception indication from the DCI format, at the same time if the base station configures the set of RBs of the configured downlink transmission in one or more RB sets, it would be more logical that the one or more RB sets are available for reception when the UE detects the DCI format. Optionally, the one or more RB sets are available for reception when the set of the symbols are within the channel occupancy duration of the base station, where the channel occupancy duration determination is presented in other embodiments. In some embodiments, if the DCI format does not comprise at least one of the first information, the second information, and the third information, and if the UE does not detect the DCI format providing a corresponding indication for the configured downlink transmission, the UE receives the configured downlink transmission. In some embodiments, if the DCI format comprises at least one of the first information, the second information, and the third information, and if the UE does not detect the DCI format providing a corresponding indication for the configured downlink transmission, the UE cancels reception of the configured downlink transmission. In some embodiments, if the DCI format comprises at least one of the first information, the second information, and the third information, and if the UE does not detect the DCI format providing a corresponding indication for the configured downlink transmission, the UE cancels reception of the configured downlink transmission when the downlink is CSI-RS transmission. In some embodiments, if the DCI format comprises at least one of the first information, the second information, and the third information, and if the UE does not detect the DCI format providing a corresponding indication for the configured downlink transmission, the UE receives the configured downlink transmission when the downlink is PDSCH or PDCCH transmission. In some embodiments, if the first condition, the second condition, and the third condition are met, the UE receives the configured downlink transmission; otherwise the UE cancels reception of the configured downlink transmission. In some embodiments, the configured downlink transmission comprises a channel state information reference signal (CSI-RS) transmission, a physical downlink shared channel (PDSCH) transmission, or a physical downlink control channel (PDCCH) transmission. In some embodiments, the set of symbols in the slot are updated by a slot format indication (SFI)-index field in the DCI format. In some embodiments, if parameters, tdd-UL-DL-ConfigurationCommon and tdd-UL-DLConfigurationDedicated are not provided, all the symbols are considered as flexible.

In the above, in some embodiments, for a first set of symbols in a slot that are configured by tdd-UL-DL-ConfigurationCommon and tdd-UL-DLConfigurationDedicated as flexible, and a UE is configured to receive DCI format 2_0 and the UE is also configured by higher layer to receive a first downlink transmission that is on the first set of symbols in a time domain and on a first set of RBs in a frequency domain, the UE will receive the first downlink transmission if a first condition is met.

The first condition is that the UE detects a DCI format 2_0 that provides the first information indicating the first set of symbols as downlink. Otherwise, the UE cancels the reception of the first downlink transmission. In some cases, the DCI format 2_0 does not comprise the first information, the UE will consider that the first set of symbols are not indicated as downlink. Alternatively, the UE can consider that the first set of symbols are indicated as downlink.

In some cases, the UE receives the first downlink transmission if the first condition and a second condition are met, otherwise the UE cancels the reception of the first downlink transmission. The second condition is that the UE detects a DCI format 2_0 that provides the second information indicating that the first set of symbols are within the channel occupancy duration of the gNB. But if the DCI format 2_0 does not comprise the second information, the channel occupancy duration is indicated by the first information, i.e. if the UE receives the first information in a DCI format 2_0 that provides the slot or symbol format indication for the first set of symbols, the first set of symbols are considered as within the channel occupancy duration. On the other hand, if the UE is configured with higher layer parameter ChannelAccessMode-r16 ='semistatic', in case that DCI format 2_0 does not comprise the first information and the second information, the channel occupancy duration is a periodic channel occupancy provided by semiStaticChannel AccessConfig-r16.

In some cases, the UE receives the first downlink transmission if the first condition and the second condition and a third condition are met, otherwise the UE cancels the reception of the first downlink transmission. The third condition is that the UE detects a DCI format 2_0 that provides the third information indicating that the RB sets where the first set of RBs are allocated in is available for reception. In some cases, if the first set of RBs are in one or more RB sets and the third information is not included in DCI format 2_0, UE can assume that the RB sets are available for reception. In an implementation, if the first set of RBs are in one or more RB sets and the third information is not included in DCI format 2_0, UE can assume that the RB sets are available for reception when the set of symbols are within the channel occupancy duration of the base station, where the channel occupancy duration determination is presented in other embodiments. In some cases, if DCI format 2_0 comprises the first information and/or the second information and/or the third information, and the UE does not detect a DCI format 2_0 providing the corresponding indication for the first downlink transmission, the UE cancels the reception of the first downlink transmission. In some embodiments, if the DCI format 2_0 comprises the first information and/or the second information and/or the third information, and the UE does not detect the DCI format 2_0 providing the corresponding indication for the first downlink transmission, the UE cancels reception of the first downlink transmission when the downlink is CSI-RS transmission. In some embodiments, if the DCI format comprises the first information and/or the second information and/or the third information, and the UE does not detect the DCI format 2_0 providing the corresponding indication for the first downlink transmission, the UE receives the first downlink transmission when the downlink is PDSCH or PDCCH transmission. In some cases, if DCI format 2_0 does not comprise the first information and/or the second information and/or the third information, and the UE does not detect a DCI format 2_0 providing the corresponding indication for the first downlink transmission, the UE receives the first downlink transmission.

FIG 4 illustrates a method of communication of a UE according to an example 1 of the present disclosure. FIG 4 illustrates that in the example 1, a DCI format 2_0 comprises a first information. If a UE detects a DCI format 2_0 with a first information indicating a first set of symbols as downlink, the UE receives CSI-RS or PDSCH or PDCCH; or otherwise, the UE cancels reception of CSI-RS or PDSCH or PDCCH (as illustrated in a block 402 of FIG 4).

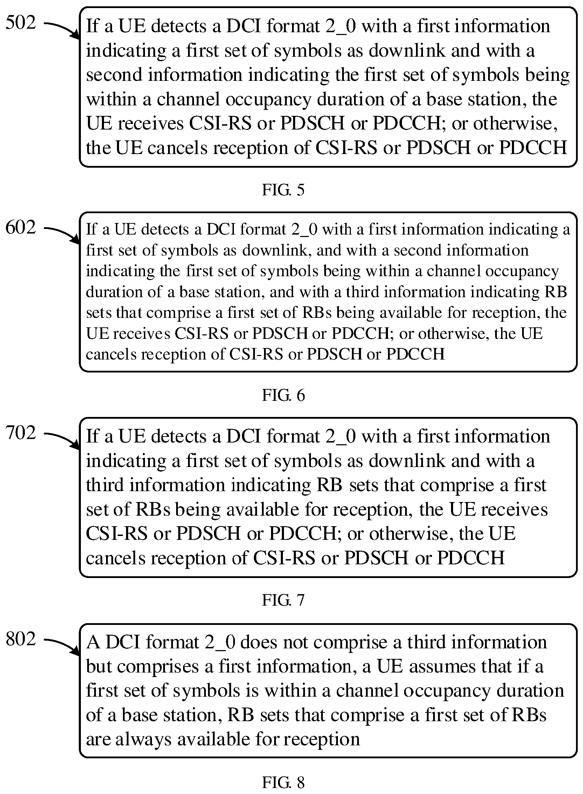

FIG 5 illustrates a method of communication of a UE according to an example 2 of the present disclosure. FIG 5 illustrates that in the example 2, a DCI format 2_0 comprises a first information and a second information. If a UE detects a DCI format 2_0 with a first information indicating a first set of symbols as downlink and with a second information indicating the first set of symbols being within a channel occupancy duration of a base station, the UE receives CSI-RS or PDSCH or PDCCH; or otherwise, the UE cancels reception of CSI-RS or PDSCH or PDCCH (as illustrated in a block 502 of FIG 5).

FIG 6 illustrates a method of communication of a UE according to an example 3 of the present disclosure. FIG 6 illustrates that in the example 3, configured CSI-RS or PDSCH or PDCCH is allocated with a first set of resource blocks in one or more RB sets. A DCI format 2_0 comprises a first information, a second information, and a third information. If a UE detects a DCI format 2_0 with a first information indicating a first set of symbols as downlink, and with a second information indicating the first set of symbols being within a channel occupancy duration of a base station, and with a third information indicating RB sets that comprise a first set of RBs being available for reception, the UE receives CSI-RS or PDSCH or PDCCH; or otherwise, the UE cancels reception of CSI-RS or PDSCH or PDCCH (as illustrated in a block 602 of FIG 6).

FIG 7 illustrates a method of communication of a UE according to an example 4 of the present disclosure. FIG 7 illustrates that in the example 4, configured CSI-RS or PDSCH or PDCCH is allocated with a first set of resource blocks in one or more RB sets. A DCI format 2_0 comprises a first information and a third information. If a UE detects a DCI format 2_0 with a first information indicating a first set of symbols as downlink and with a third information indicating RB sets that comprise a first set of RBs being available for reception, the UE receives CSI-RS or PDSCH or PDCCH; or otherwise, the UE cancels reception of CSI-RS or PDSCH or PDCCH (as illustrated in a block 702 of FIG 7). Note that in this example, the channel occupancy duration is indicated also by the first information, i.e. if the UE receives the first information in a DCI format 2_0 that provides the slot or symbol format indication for the first set of symbols, the first set of symbols are considered as within the channel occupancy duration.

FIG 8 illustrates a method of communication of a UE according to an example 5 of the present disclosure. FIG 8 illustrates that in the example 5, configured CSI-RS or PDSCH or PDCCH is allocated with a first set of resource blocks in one or more RB sets. In this case, a DCI format 2_0 does not comprise a third information but comprises a first information, a UE assumes that if a first set of symbols are within a channel occupancy duration of a base station, RB sets that comprise a first set of RBs are available for reception (as illustrated in a block 802 of FIG 8). Similar to example 4, the channel occupancy duration is provided by the first information, i.e. if the UE receives the first information in a DCI format 2_0 that provides the slot or symbol format indication for the first set of symbols, the first set of symbols are considered as within the channel occupancy duration. Thus, the UE will only check the first information in DCI format 2_0, i.e., if the UE detects a DCI format 2_0 with the first information indicating the first set of symbols as downlink, the UE receives the CSI-RS or PDSCH or PDCCH, or otherwise, the UE cancels the reception of the CSI-RS or PDSCH or PDCCH.

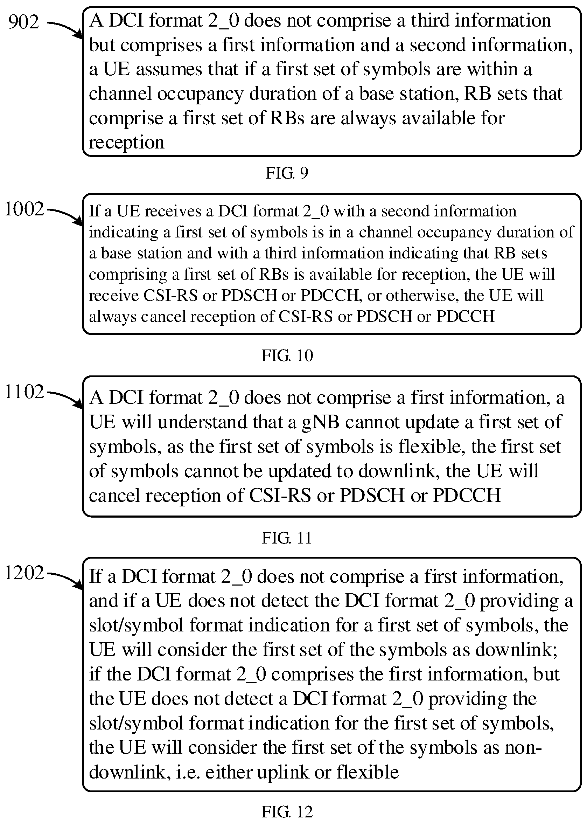

FIG 9 illustrates a method of communication of a UE according to an example 6 of the present disclosure. FIG 9 illustrates that in the example 6, configured CSI-RS or PDSCH or PDCCH is allocated with a first set of resource blocks in one or more RB sets. In this case, a DCI format 2_0 does not comprise a third information but comprises a first information and a second information, a UE assumes that if a first set of symbols are within a channel occupancy duration of a base station, RB sets that comprise a first set of RBs are available for reception (as illustrated in a block 902 of FIG 9). Thus, the UE will check both the first information and the second information in DCI format 2_0, i.e. if the UE detects a DCI format 2_0 with the first information indicating the first set of symbols as downlink, and with the second information indicating the first set of symbols being within the channel occupancy duration, the UE receives CSI-RS or PDSCH or PDCCH; or otherwise, the UE cancels the reception of the CSI-RS or PDSCH or PDCCH.

In the following examples, it is discussed that the case where the first information is not included in DCI format 2_0. Then what is the UE behavior for the configured CSI-RS, PDSCH, PDCCH reception.

FIG 10 illustrates a method of communication of a UE according to an example 7 of the present disclosure. FIG 10 illustrates that in the example 7, configured CSI-RS or PDSCH or PDCCH is allocated with a first set of resource blocks in one or more RB sets. A DCI format 2_0 does not comprise the first information but comprises the third information and/or the second information. In this case, if a UE receives a DCI format 2_0 with a second information indicating a first set of symbols are in a channel occupancy duration of a base station and with a third information indicating that RB sets comprising a first set of RBs are available for reception, the UE will receive CSI-RS or PDSCH or PDCCH, or otherwise, the UE will cancel reception of CSI-RS or PDSCH or PDCCH (as illustrated in a block 1002 of FIG 10). Note that the channel occupancy duration in this case is indicated by the second information in DCI format 2_0. But if the UE is configured with higher layer parameter ChannelAccessMode-r16 ='semistatic', if the DCI format 2_0 does not comprise the second information, the channel occupancy duration is the periodic channel occupancy provided by semiStaticChannel AccessConfig-r16.

In a similar example, if the UE is not configured with an active downlink (DL) bandwidth part that contains more than one RB sets, the third information is not necessary. Thus, if the DCI format 2_0 does not comprise the first information, the UE will only rely on the channel occupancy duration to decide if the UE will receive the CSI-RS or PDSCH or PDCCH. If the first set of symbols are within the channel occupancy duration, the UE will receive otherwise the UE will cancel the reception.

FIG 11 illustrates a method of communication of a UE according to an example 8 of the present disclosure. FIG 11 illustrates that in the example 8, a DCI format 2_0 does not comprise a first information. Thus, the UE will understand that a gNB cannot update a first set of symbols. As the first set of symbols are flexible, and the first set of symbols cannot be updated to downlink. Thus, the UE will cancel the reception of the CSI-RS or PDSCH or PDCCH (as illustrated in a block 1102 of FIG 11).

Alternatively, the UE can see this configuration as an invalid case, this is because it would be useless for the gNB to configure the CSI-RS or PDSCH and configure the DCI format 2_0 without the first information, if the UE would cancel the configured reception. In this case, another solution is that if the DCI format 2_0 is not configured to include the first information and the UE is configured by the higher layer to receive CSI-RS or PDSCH on the first set of symbols in a slot. The UE will consider the first set of symbols as downlink. And then the UE should check further other conditions as presented in examples 2-7 to decide if the UE needs to perform the reception or cancel the reception.

FIG 12 illustrates a method of communication of a UE according to an example 9 of the present disclosure. FIG 12 illustrates that in the example 9, a UE is configured to monitor PDCCH with DCI format 2_0. Moreover, the DCI format 2_0 does not comprise a first information. If the UE does not detect a DCI format 2_0 providing a slot/symbol format indication for a first set of symbols, the UE will consider the first set of the symbols as downlink. On the other hand, if the DCI format 2_0 comprises the first information, but the UE does not detect a DCI format 2_0 providing the slot/symbol format indication for the first set of symbols, the UE will consider the first set of the symbols as non-downlink, i.e. either uplink or flexible (as illustrated in a block 1202 of FIG 12). Optionally, a UE is configured to monitor PDCCH with DCI format 2_0 and if the DCI format 2_0 comprises the first information, but the UE does not detect the DCI format 2_0 that provides the expected slot format indication on the first set of symbols, the UE will cancel the reception of the configured downlink transmission if the transmission is CSI-RS, and the UE will receive the configured downlink transmission if the transmission is PDSCH or PDCCH. Note that here the expected slot format indication is downlink or uplink or flexible. Optionally, a UE is configured to monitor PDCCH with DCI format 2_0 and if the DCI format 2_0 comprises the second information, but the UE does not detect the DCI format 2_0 that provides the expected indication on the first set of symbols, the UE will cancel the reception of the configured downlink transmission if the transmission is CSI-RS, and the UE will receive the configured downlink transmission if the transmission is PDSCH or PDCCH. Note that here the expected indication is that the first set of symbols are in the channel occupancy duration of the base station. Optionally, a UE is configured to monitor PDCCH with DCI format 2_0 and if the DCI format 2_0 comprises the third information, but the UE does not detect the DCI format 2_0 that provides the expected indication on the first set of RBs, the UE will cancel the reception of the configured downlink transmission if the transmission is CSI-RS, and the UE will receive the configured downlink transmission if the transmission is PDSCH or PDCCH. Note that here the expected indication is that the one or more RB sets, where the first set of RBs are configured in, are available for reception.

In summary, in some embodiments, in a time division duplex (TDD) system, a UE can be provided by a base station, such as a gNB, with parameters, tdd-UL-DL-ConfigurationCommon and tdd-UL-DLConfigurationDedicated to have slot and symbol pattern, the pattern configuration will inform the UE about symbol format in a slot. The symbol format comprises downlink, uplink, flexible. The downlink and uplink formats, once configured, cannot be updated; while the flexible format can be updated by an SFI-index field in a DCI format 2_0. If the tdd-UL-DL-ConfigurationCommon and tdd-UL-DLConfigurationDedicated are not provided, all the symbols are considered as flexible. In some embodiments, a first set of symbols in a slot that is configured by tdd-UL-DL-ConfigurationCommon and tdd-UL-DLConfigurationDedicated as flexible, and for a UE, the first set of symbols are configured by higher layers to receive a first configured downlink transmission, i.e. CSI-RS or a PDSCH or PDCCH. In a frequency domain, the first configured downlink transmission corresponds to a first set of resource blocks. In some embodiments, a first information is used to indicate the symbol format of the first set of symbols. One example of the first information is an SFI-index field. In some embodiments, a second information is used to indicate the channel occupancy duration for a serving cell of gNB. In some embodiments, a third information is used to resource block (RB) set availability for reception for a serving cell. The first information, the second information, and the third information may be present simultaneously in a DCI format 2_0 by gNB configuration, but there may also be the case that part of the first information, the second information, and the third information are present in the DCI format 2_0.

In some embodiments, the term, "cancel" may mean: do not receive or refuse to receive or reject to receive. In details, the UE cancels reception of the configured downlink transmission on the set of symbols in the slot and on the set of RBs may refer to the UE does not to receive or refuses to receive or rejects to receive the configured downlink transmission on the set of symbols in the slot and on the set of RBs or may refer to the UE refuses or rejects reception of the configured downlink transmission on the set of symbols in the slot and on the set of RBs. Canceling reception of the configured downlink transmission on the set of symbols in the slot and on the set of RBs may refer to not receiving or refuse to receive or reject to receive the configured downlink transmission on the set of symbols in the slot and on the set of RBs or may refer to refusing or rejecting reception of the configured downlink transmission on the set of symbols in the slot and on the set of RBs.

Commercial interests for some embodiments are as follows. 1. solving issues in the prior art. 2. providing a method of receiving a configured downlink transmission by a UE if a condition is met. 3. providing a method of canceling reception of the configured downlink transmission by the UE if a condition is not met. 4. providing a good communication performance. 5. providing a high reliability. 6. Some embodiments of the present disclosure are used by 5G-NR chipset vendors, V2X communication system development vendors, automakers including cars, trains, trucks, buses, bicycles, moto-bikes, helmets, and etc., drones (unmanned aerial vehicles), smartphone makers, communication devices for public safety use, AR/VR device maker for example gaming, conference/seminar, education purposes. Some embodiments of the present disclosure are a combination of "techniques/processes" that can be adopted in 3GPP specification to create an end product. Some embodiments of the present disclosure could be adopted in the 5G NR unlicensed band communications. Some embodiments of the present disclosure propose technical mechanisms.

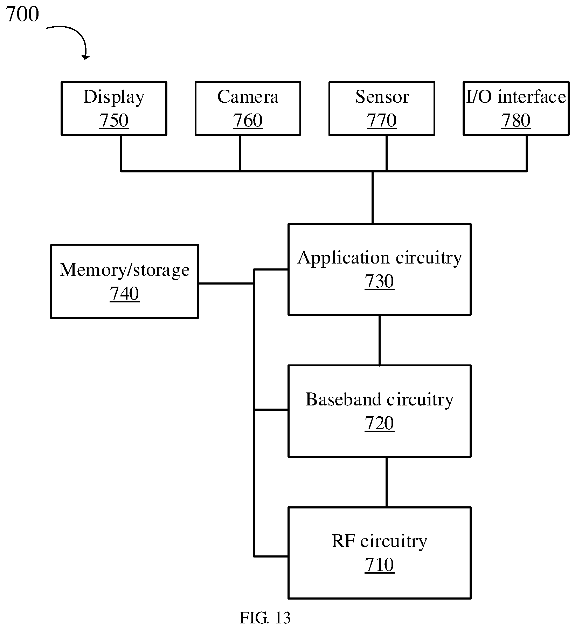

FIG 13 is a block diagram of an example system 700 for wireless communication according to an embodiment of the present disclosure. Embodiments described herein may be implemented into the system using any suitably configured hardware and/or software. FIG 13 illustrates the system 700 including a radio frequency (RF) circuitry 710, a baseband circuitry 720, an application circuitry 730, a memory/storage 740, a display 750, a camera 760, a sensor 770, and an input/output (I/O) interface 780, coupled with each other at least as illustrated. The application circuitry 730 may include a circuitry such as, but not limited to, one or more single-core or multi-core processors. The processors may include any combination of general-purpose processors and dedicated processors, such as graphics processors, application processors. The processors may be coupled with the memory/storage and configured to execute instructions stored in the memory/storage to enable various applications and/or operating systems running on the system.

The baseband circuitry 720 may include circuitry such as, but not limited to, one or more single-core or multi-core processors. The processors may include a baseband processor. The baseband circuitry may handle various radio control functions that enables communication with one or more radio networks via the RF circuitry. The radio control functions may include, but are not limited to, signal modulation, encoding, decoding, radio frequency shifting, etc. In some embodiments, the baseband circuitry may provide for communication compatible with one or more radio technologies. For example, in some embodiments, the baseband circuitry may support communication with an evolved universal terrestrial radio access network (EUTRAN) and/or other wireless metropolitan area networks (WMAN), a wireless local area network (WLAN), a wireless personal area network (WPAN). Embodiments in which the baseband circuitry is configured to support radio communications of more than one wireless protocol may be referred to as multi-mode baseband circuitry.

In various embodiments, the baseband circuitry 720 may include circuitry to operate with signals that are not strictly considered as being in a baseband frequency. For example, in some embodiments, baseband circuitry may include circuitry to operate with signals having an intermediate frequency, which is between a baseband frequency and a radio frequency. The RF circuitry 710 may enable communication with wireless networks using modulated electromagnetic radiation through a non-solid medium. In various embodiments, the RF circuitry may include switches, filters, amplifiers, etc. to facilitate the communication with the wireless network. In various embodiments, the RF circuitry 710 may include circuitry to operate with signals that are not strictly considered as being in a radio frequency. For example, in some embodiments, RF circuitry may include circuitry to operate with signals having an intermediate frequency, which is between a baseband frequency and a radio frequency.

In various embodiments, the transmitter circuitry, control circuitry, or receiver circuitry discussed above with respect to the user equipment, eNB, or gNB may be embodied in whole or in part in one or more of the RF circuitry, the baseband circuitry, and/or the application circuitry. As used herein, "circuitry" may refer to, be part of, or include an Application Specific Integrated Circuit (ASIC), an electronic circuit, a processor (shared, dedicated, or group), and/or a memory (shared, dedicated, or group) that execute one or more software or firmware programs, a combinational logic circuit, and/or other suitable hardware components that provide the described functionality. In some embodiments, the electronic device circuitry may be implemented in, or functions associated with the circuitry may be implemented by, one or more software or firmware modules. In some embodiments, some or all of the constituent components of the baseband circuitry, the application circuitry, and/or the memory/storage may be implemented together on a system on a chip (SOC). The memory/storage 740 may be used to load and store data and/or instructions, for example, for system. The memory/storage for one embodiment may include any combination of suitable volatile memory, such as dynamic random access memory (DRAM)), and/or non-volatile memory, such as flash memory.

In various embodiments, the I/O interface 780 may include one or more user interfaces designed to enable user interaction with the system and/or peripheral component interfaces designed to enable peripheral component interaction with the system. User interfaces may include, but are not limited to a physical keyboard or keypad, a touchpad, a speaker, a microphone, etc. Peripheral component interfaces may include, but are not limited to, a non-volatile memory port, a universal serial bus (USB) port, an audio jack, and a power supply interface. In various embodiments, the sensor 770 may include one or more sensing devices to determine environmental states and/or location first information related to the system. In some embodiments, the sensors may include, but are not limited to, a gyro sensor, an accelerometer, a proximity sensor, an ambient light sensor, and a positioning unit. The positioning unit may also be part of, or interact with, the baseband circuitry and/or RF circuitry to communicate with components of a positioning network, e.g., a global positioning system (GPS) satellite.

In various embodiments, the display 750 may include a display, such as a liquid crystal display and a touch screen display. In various embodiments, the system 700 may be a mobile computing device such as, but not limited to, a laptop computing device, a tablet computing device, a netbook, an ultrabook, a smartphone, a AR/VR glasses, etc. In various embodiments, system may have more or less components, and/or different architectures. Where appropriate, methods described herein may be implemented as a computer program. The computer program may be stored on a storage medium, such as a non-transitory storage medium.

A person having ordinary skill in the art understands that each of the units, algorithm, and steps described and disclosed in the embodiments of the present disclosure are realized using electronic hardware or combinations of software for computers and electronic hardware. Whether the functions run in hardware or software depends on the state of application and design requirement for a technical plan. A person having ordinary skill in the art can use different ways to realize the function for each specific application while such realizations should not go beyond the scope of the present disclosure. It is understood by a person having ordinary skill in the art that he/she can refer to the working processes of the system, device, and unit in the above-mentioned embodiment since the working processes of the above-mentioned system, device, and unit are basically the same. For easy description and simplicity, these working processes will not be detailed.

It is understood that the disclosed system, device, and method in the embodiments of the present disclosure can be realized with other ways. The above-mentioned embodiments are exemplary only. The division of the units is merely based on logical functions while other divisions exist in realization. It is possible that a plurality of units or components are combined or integrated in another system. It is also possible that some characteristics are omitted or skipped. On the other hand, the displayed or discussed mutual coupling, direct coupling, or communicative coupling operate through some ports, devices, or units whether indirectly or communicatively by ways of electrical, mechanical, or other kinds of forms.

The units as separating components for explanation are or are not physically separated. The units for display are or are not physical units, that is, located in one place or distributed on a plurality of network units. Some or all of the units are used according to the purposes of the embodiments. Moreover, each of the functional units in each of the embodiments can be integrated in one processing unit, physically independent, or integrated in one processing unit with two or more than two units.

If the software function unit is realized and used and sold as a product, it can be stored in a readable storage medium in a computer. Based on this understanding, the technical plan proposed by the present disclosure can be essentially or partially realized as the form of a software product. Or, one part of the technical plan beneficial to the conventional technology can be realized as the form of a software product. The software product in the computer is stored in a storage medium, including a plurality of commands for a computational device (such as a personal computer, a server, or a network device) to run all or some of the steps disclosed by the embodiments of the present disclosure. The storage medium includes a USB disk, a mobile hard disk, a read-only memory (ROM), a random access memory (RAM), a floppy disk, or other kinds of media capable of storing program codes.

While the present disclosure has been described in connection with what is considered the most practical and preferred embodiments, it is understood that the scope of the present invention is defined by the scope of the appended claims.

## Claims

1. A method (200) of communication performed by a user equipment, UE, the method comprising:
being configured (202), by a base station, to receive, from the base station, a downlink transmission on a set of symbols in a slot and a set of resource blocks, RBs; and
receiving (204), from the base station, the configured downlink transmission on the set of symbols in the slot and on the set of RBs, or otherwise actively canceling the reception of the configured downlink transmission on the set of symbols in the slot and on the set of RBs;
wherein receiving (204), from the base station, the configured downlink transmission on the set of symbols in the slot and on the set of RBs, or otherwise actively canceling the reception of the configured downlink transmission on the set of symbols in the slot and on the set of RBs comprises:
receiving or canceling the reception of the configured downlink transmission on the set of symbols in the slot and on the set of RBs, according to a detection result of a downlink control information, DCI, transmitted by the base station to the UE;
wherein receiving or canceling the reception of the configured downlink transmission on the set of symbols in the slot and on the set of RBs, according to the detection result of the DCI transmitted by the base station to the UE comprises:
receiving, from the base station, the configured downlink transmission on the set of symbols in the slot and on the set of RBs if the UE detects the DCI, transmitted by the base station to the UE; and
canceling the reception of the configured downlink transmission on the set of symbols in the slot and on the set of RBs if the UE has not detected the DCI transmitted by the base station to the UE.

2. The method (200) of claim 1, wherein the set of symbols in the slot are configured as flexible by one or more parameters, tdd-UL-DL-ConfigurationCommon and/or tdd-UL-DLConfigurationDedicated.

3. The method (200) of claim 2, wherein a DCI format of the DCI comprises a DCI format 2 0.

4. The method (200) of claim 2 or 3, wherein a DCI format of the DCI comprises at least one of the followings:
a first information that is used to indicate one or more slot formats;
a second information that is used to indicate the channel occupancy duration of the base station; or
a third information that is used to indicate one or more RB sets availability for reception.

5. The method (200) of claim 4, wherein the UE detecting the DCI comprises:
in a case that the DCI format comprises the first information, the UE detects the first information indicating the set of symbols as downlink;
in a case that the DCI format comprises the second information, the UE detects the second information indicating that the set of symbols are within the channel occupancy duration of the base station; and/or,
in a case that the DCI format comprises the third information, the UE detects the third information indicating that one or more RB sets, where the set of RBs are allocated in, are available for reception.

6. The method (200) of claim 4, wherein canceling the reception of the configured downlink transmission on the set of symbols in the slot and on the set of RBs if the UE has not detected the DCI comprises:
if the UE has not detected the DCI format providing a corresponding indication for the configured downlink transmission, the UE cancels the reception of the configured downlink transmission.

7. A user equipment (10), UE, comprising:
a memory (12);
a transceiver (13); and
a processor (11) coupled to the memory (12) and the transceiver (13); wherein:
the transceiver (13) is configured, by a base station (20), to receive, from the base station, a downlink transmission on a set of symbols in a slot and a set of resource blocks, RBs; and
the transceiver (13) is configured to receive, from the base station,
the configured downlink transmission on the set of symbols in the slot and on the set of RBs, or otherwise to actively cancel the reception of the configured downlink transmission on the set of symbols in the slot and on the set of RBs;
wherein the transceiver (13) is configured to:
receive or cancel the reception of the configured downlink transmission on the set of symbols in the slot and on the set of RBs, according to a detection result of a downlink control information, DCI, transmitted by the base station to the UE;
wherein the transceiver (13) is further configured to:
receive, from the base station, the configured downlink transmission on the set of symbols in the slot and on the set of RBs if the processor (11) detects the DCI transmitted by the base station to the UE; and
cancel the reception of the configured downlink transmission on the set of symbols in the slot and on the set of RBs if the processor (11) has not detected the DCI transmitted by the base station to the UE.

8. The UE (10) of claim 7, wherein the set of symbols in the slot are configured as flexible by one or more parameters, tdd-UL-DL-ConfigurationCommon and/or tdd-UL-DLConfigurationDedicated.

9. The UE (10) of claim 7 or 8, wherein a DCI format of the DCI comprises at least one of the followings:
a first information that is used to indicate one or more slot formats;
a second information that is used to indicate the channel occupancy duration of the base station; or
a third information that is used to indicate one or more RB sets availability for reception.

10. The UE (10) of claim 9, wherein the processor (11) detecting the DCI comprises:
in a case that the DCI format comprises the first information, the processor (11) detects the first information indicating the set of symbols as downlink;
in a case that the DCI format comprises the second information, the processor (11) detects the second information indicating that the set of symbols are within the channel occupancy duration of the base station; and/or,
in a case that the DCI format comprises the third information, the processor (11) detects the third information indicating that one or more RB sets, where the set of RBs are allocated in, are available for reception.

11. The UE (10) of claim 9, wherein if the processor (11) has not detected the DCI format providing a corresponding indication for the configured downlink transmission, the processor (11) does not consider all the configured downlink transmission is valid, and the transceiver (13) only receives valid configured downlink transmission.

## Patentansprüche

1. Verfahren (200) zur Kommunikation, ausgeführt durch ein Benutzer-Equipment, UE (User Equipment), wobei das Verfahren umfasst:
ausgelegt zu werden (202), durch eine Basisstation, von der Basisstation eine Abwärtsstreckenübertragung auf einem Satz von Symbolen in einem Schlitz und einem Satz von Ressourcenblöcken, RBs, zu empfangen; und
von der Basisstation die konfigurierte Abwärtsstreckenübertragung auf dem Satz von Symbolen in dem Schlitz und auf dem Satz von RBs zu empfangen (204) oder andernfalls aktiv den Empfang der konfigurierten Abwärtsstreckenübertragung auf dem Satz von Symbolen im Schlitz und auf dem Satz von RBs abzubrechen;
wobei das Empfangen (204), von der Basisstation, der konfigurierten Abwärtsstreckenübertragung auf dem Satz von Symbolen in dem Schlitz und auf dem Satz von RBs oder andernfalls das aktive Abbrechen des Empfangs der konfigurierten Abwärtsstreckenübertragung auf dem Satz von Symbolen im Schlitz und auf dem Satz von RBs umfasst: Empfangen oder Abbrechen des Empfangs der konfigurierten Abwärtsstreckenübertragung auf dem Satz von Symbolen im Schlitz und auf dem Satz von RBs gemäß einem Erkennungsergebnis von Abwärtsstrecken-Steuerinformationen, DCI (Downlink Control Information), die durch die Basisstation an das UE übertragen werden;
wobei das Empfangen oder Abbrechen des Empfangs der konfigurierten Abwärtsstreckenübertragung auf dem Satz von Symbolen im Schlitz und auf dem Satz von RBs gemäß einem Erkennungsergebnis der DCI, die durch die Basisstation an das UE übertragen werden, umfasst:
Empfangen, von der Basisstation, der konfigurierten Abwärtsstreckenübertragung auf dem Satz von Symbolen im Schlitz und auf dem Satz von RBs, wenn das UE die durch die Basisstation an das UE übertragenen DCI erkennt; und
Abbrechen des Empfangs der konfigurierten Abwärtsstreckenübertragung auf dem Satz von Symbolen im Schlitz und auf dem Satz von RBs, wenn das UE die durch die Basisstation an das UE übertragenen DCI nicht erkannt hat.

2. Verfahren (200) nach Anspruch 1, wobei der Satz von Symbolen im Schlitz durch einen oder mehrere Parameter, tdd-UL-DL-ConfigurationCommon und/oder tdd-UL-DLConfigurationDedicated, als flexibel ausgelegt wird.

3. Verfahren (200) nach Anspruch 2, wobei ein DCI-Format der DCI ein DCI-Format 2_0 umfasst.

4. Verfahren (200) nach Anspruch 2 oder 3, wobei ein DCI-Format der DCI wenigstens eines der Folgenden umfasst:
erste Informationen, die zur Angabe eines oder mehrerer Schlitzformate verwendet werden;
zweite Informationen, die zur Angabe der Kanalbelegungsdauer der Basisstation verwendet werden;
oder
dritte Informationen, die zur Angabe der Verfügbarkeit eines oder mehrerer RB-Sätze für den Empfang verwendet werden.

5. Verfahren (200) nach Anspruch 4, wobei das Erkennen der DCI durch das UE umfasst:
falls das DCI-Format die ersten Informationen enthält, erkennt das UE die ersten Informationen, die den Satz von Symbolen als Abwärtsstrecke angeben;
falls das DCI-Format die zweiten Informationen umfasst, erkennt das UE die zweiten Informationen, die anzeigen,
dass der Satz von Symbolen innerhalb der Kanalbelegungsdauer der Basisstation liegt; und/oder,
falls das DCI-Format die dritten Informationen umfasst, erkennt das UE die dritten Informationen, die anzeigen, dass ein oder mehrere RB-Sätze, in denen der Satz von RBs zugewiesen ist, für den Empfang verfügbar sind.

6. Verfahren (200) nach Anspruch 4, wobei das Abbrechen des Empfangs der konfigurierten Abwärtsstreckenübertragung auf dem Satz von Symbolen im Schlitz und auf dem Satz von RBs, wenn das UE die DCI nicht erkannt hat, umfasst:
wenn das UE das DCI-Format, das eine entsprechende Anzeige für die konfigurierte Abwärtsstreckenübertragung bereitstellt, nicht erkannt hat, bricht das UE den Empfang der konfigurierten Abwärtsstreckenübertragung ab.

7. Benutzer-Equipment (10), UE (User Equipment), umfassend:
einen Speicher (12);
einen Sendeempfänger (13); und
einen Prozessor (11), der mit dem Speicher (12) und dem Sendeempfänger (13) gekoppelt ist; wobei
der Sendeempfänger (13), durch eine Basisstation (20), dafür ausgelegt ist, von der Basisstation eine Abwärtsstreckenübertragung auf einem Satz von Symbolen in einem Schlitz und einem Satz von Ressourcenblöcken, RBs, zu empfangen; und
der Sendeempfänger (13) dafür ausgelegt ist, von der Basisstation die konfigurierte Abwärtsstreckenübertragung auf dem Satz von Symbolen in dem Schlitz und auf dem Satz von RBs zu empfangen, oder andernfalls aktiv den Empfang der konfigurierten Abwärtsstreckenübertragung auf dem Satz von Symbolen im Schlitz und auf dem Satz von RBs abzubrechen;
wobei der Sendeempfänger (13) ausgelegt ist zum:
Empfangen oder Abbrechen des Empfangs der konfigurierten Abwärtsstreckenübertragung auf dem Satz von Symbolen im Schlitz und auf dem Satz von RBs, gemäß einem Erkennungsergebnis von Abwärtsstrecken-Steuerinformationen, DCI (Downlink Control Information), die durch die Basisstation an das UE übertragen werden;
wobei der Sendeempfänger (13) ferner ausgelegt ist zum:
Empfangen, von der Basisstation, der konfigurierten Abwärtsstreckenübertragung auf dem Satz von Symbolen im Schlitz und auf dem Satz von RBs, wenn der Prozessor (11) die durch die Basisstation an das UE übertragenen DCI erkennt; und
Abbrechen des Empfangs der konfigurierten Abwärtsstreckenübertragung auf dem Satz von Symbolen im Schlitz und auf dem Satz von RBs, wenn der Prozessor (11) die durch die Basisstation an das UE übertragenen DCI nicht erkannt hat.

8. UE (10) nach Anspruch 7, wobei der Satz von Symbolen im Schlitz durch einen oder mehrere Parameter, tdd-UL-DL-ConfigurationCommon und/oder tdd-UL-DLConfigurationDedicated, als flexibel ausgelegt wird.

9. UE (10) nach Anspruch 7 oder 8, wobei ein DCI-Format der DCI wenigstens eines der Folgenden umfasst:
erste Informationen, die zur Angabe eines oder mehrerer Schlitzformate verwendet werden;
zweite Informationen, die zur Angabe der Kanalbelegungsdauer der Basisstation verwendet werden;
oder
dritte Informationen, die zur Angabe der Verfügbarkeit eines oder mehrerer RB-Sätze für den Empfang verwendet werden.

10. UE (10) nach Anspruch 9, wobei das Erkennen der DCI durch den Prozessor (11) umfasst:
falls das DCI-Format die ersten Informationen enthält, erkennt der Prozessor (11) die ersten Informationen, die den Satz von Symbolen als Abwärtsstrecke angeben;
falls das DCI-Format die zweiten Informationen umfasst, erkennt der Prozessor (11) die zweiten Informationen, die anzeigen, dass der Satz von Symbolen innerhalb der Kanalbelegungsdauer der Basisstation liegt; und/oder,
falls das DCI-Format die dritten Informationen umfasst, erkennt der Prozessor (11) die dritten Informationen, die anzeigen, dass ein oder mehrere RB-Sätze, in denen der Satz von RBs zugewiesen ist, für den Empfang verfügbar sind.

11. UE (10) nach Anspruch 9, wobei, wenn der Prozessor (11) das DCI-Format nicht erkannt hat, das eine entsprechende Anzeige für die konfigurierte Abwärtsstreckenübertragung bereitstellt, der Prozessor (11) nicht alle konfigurierten Abwärtsstreckenübertragungen als gültig betrachtet und der Sendeempfänger (13) nur gültige konfigurierte Abwärtsstreckenübertragungen empfängt.

## Revendications

1. Procédé (200) de communication effectué par un équipement d'utilisateur, UE, le procédé comprenant :
le fait d'être configuré (202), par une station de base, pour recevoir à partir de la station de base, une transmission de liaison descendante sur un ensemble de symboles dans un créneau et un ensemble de blocs de ressource, RB ; et
la réception (204), à partir de la station de base, de la transmission de liaison descendante configurée sur l'ensemble de symboles dans le créneau et sur l'ensemble de RB, ou l'annulation active de la réception de la transmission de liaison descendante configurée sur l'ensemble de symboles dans le créneau et sur l'ensemble de RB ;
dans lequel la réception (204), à partir de la station de base, de la transmission de liaison descendante configurée sur l'ensemble de symboles dans le créneau et sur l'ensemble de RB, ou l'annulation active de la réception de la transmission de liaison descendante configurée sur l'ensemble de symboles dans le créneau et
sur l'ensemble de RB comprend :
la réception ou l'annulation de la réception de la transmission de liaison descendante configurée sur l'ensemble de symboles dans le créneau et sur l'ensemble de RB, en fonction d'un résultat de détection d'une information de commande de liaison descendante, DCI, transmise par la station de base à l'UE ;
dans lequel la réception ou l'annulation de la réception de la transmission de liaison descendante configurée sur l'ensemble de symboles dans le créneau et sur l'ensemble de RB, en fonction du résultat de la détection de la DCI transmise par la station de base à l'UE, comprend :
la réception, à partir de la station de base, de la transmission de liaison descendante configurée sur l'ensemble de symboles dans le créneau et sur l'ensemble de RB si l'UE détecte la DCI transmise par la station de base à l'UE ; et
l'annulation de la réception de la transmission de liaison descendante configurée sur l'ensemble de symboles dans le créneau et sur l'ensemble de RB si l'UE n'a pas détecté la DCI transmise par la station de base à l'UE.

2. Procédé (200) selon la revendication 1, dans lequel l'ensemble de symboles dans le créneau est configuré comme flexible par un ou plusieurs paramètres, tdd-UL-DL-ConfigurationCommon et/ou tdd-UL-DLConfigurationDedicated.

3. Procédé (200) selon la revendication 2, dans lequel un format DCI de la DCI comprend un format DCI 2_0.

4. Procédé (200) selon la revendication 2 ou 3, dans lequel un format DCI de la DCI comprend au moins l'un parmi :
une première information qui est utilisée pour indiquer un ou plusieurs formats de créneau ;
une deuxième information qui est utilisée pour indiquer la durée d'occupation du canal de la station de base ;
ou
une troisième information qui est utilisée pour indiquer la disponibilité d'un ou de plusieurs ensembles de RB pour la réception.

5. Procédé (200) selon la revendication 4, dans lequel l'UE détectant la DCI comprend :
dans le cas où le format DCI comprend la première information, l'UE détecte la première information indiquant l'ensemble de symboles en tant que liaison descendante ;
dans le cas où le format DCI comprend la deuxième information, l'UE détecte la deuxième information indiquant que l'ensemble de symboles se trouve dans la durée d'occupation du canal de la station de base ;
et/ou,
dans le cas où le format DCI comprend la troisième information, l'UE détecte la troisième information indiquant qu'un ou plusieurs ensembles de RB, où l'ensemble de RB est alloué, sont disponibles pour la réception.

6. Procédé (200) selon la revendication 4, dans lequel l'annulation de la réception de la transmission de liaison descendante configurée sur l'ensemble de symboles dans le créneau et sur l'ensemble de RB si l'UE n'a pas détecté la DCI comprend :
si l'UE n'a pas détecté le format DCI fournissant une indication correspondante pour la transmission de liaison descendante configurée, l'UE annule la réception de la transmission de liaison descendante configurée.

7. Équipement d'utilisateur (10), UE, comprenant :
une mémoire (12) ;
un émetteur-récepteur (13) ; et
un processeur (11) couplé à la mémoire (12) et à l'émetteur-récepteur (13) ; dans lequel :
l'émetteur-récepteur (13) est configuré, par une station de base (20), pour recevoir à partir de la station de base, une transmission de liaison descendante sur un ensemble de symboles dans un créneau et un ensemble de blocs de ressource, RB ; et
l'émetteur-récepteur (13) est configuré pour recevoir, à partir de la station de base, la transmission de liaison descendante configurée sur l'ensemble de symboles dans le créneau et sur l'ensemble de RB, ou sinon pour annuler activement la réception de la transmission de liaison descendante configurée sur l'ensemble de symboles dans le créneau et sur l'ensemble de RB ;
dans lequel l'émetteur-récepteur (13) est configuré pour :
recevoir ou annuler la réception de la transmission de liaison descendante configurée sur l'ensemble de symboles dans le créneau et sur l'ensemble de RB, en fonction d'un résultat de détection d'une information de commande de liaison descendante, DCI, transmise par la station de base à l'UE ;
dans lequel l'émetteur-récepteur (13) est en outre configuré pour :
recevoir, à partir de la station de base, la transmission de liaison descendante configurée sur l'ensemble de symboles dans le créneau et sur l'ensemble de RB si le processeur (11) détecte la DCI transmise par la station de base à l'UE ; et
annuler la réception de la transmission de liaison descendante configurée sur l'ensemble de symboles dans le créneau et sur l'ensemble de RB si le processeur (11) n'a pas détecté la DCI transmise par la station de base à l'UE.

8. UE (10) selon la revendication 7, dans lequel l'ensemble de symboles dans le créneau est configuré comme flexible par un ou plusieurs paramètres, tdd-UL-DL-ConfigurationCommon et/ou tdd-UL-DLConfigurationDedicated.

9. UE (10) selon la revendication 7 ou 8, dans lequel un format DCI de la DCI comprend au moins l'un parmi :
une première information qui est utilisée pour indiquer un ou plusieurs formats de créneau ;
une deuxième information qui est utilisée pour indiquer la durée d'occupation du canal de la station de base ;
ou
une troisième information qui est utilisée pour indiquer la disponibilité d'un ou de plusieurs ensembles de RB pour la réception.

10. UE (10) selon la revendication 9, dans lequel le processeur (11) détectant la DCI comprend :
dans le cas où le format DCI comprend la première information, le processeur (11) détecte la première information indiquant l'ensemble de symboles en tant que liaison descendante ;
dans le cas où le format DCI comprend la deuxième information, le processeur (11) détecte la deuxième information indiquant que l'ensemble de symboles se trouve dans la durée d'occupation du canal de la station de base ; et/ou,
dans le cas où le format DCI comprend la troisième information, le processeur (11) détecte la troisième information indiquant qu'un ou plusieurs ensembles de RB, où l'ensemble de RB est alloué, sont disponibles pour la réception.

11. UE (10) selon la revendication 9, dans lequel si le processeur (11) n'a pas détecté le format DCI fournissant une indication correspondante pour la transmission de liaison descendante configurée, le processeur (11) ne considère pas que la totalité de transmission de liaison descendante configurée est valide, et l'émetteur-récepteur (13) ne reçoit que la transmission de liaison descendante configurée valide.
